# EUROPÄISCHE PATENTSCHRIFT

(11) **EP 1 151 252 B1**
(45) Veröffentlichungstag und Bekanntmachung des Hinweises auf die Patenterteilung: **20.04.2005**
(21) Anmeldenummer: 00902661.8
(22) Anmeldetag: 07.02.2000
(51) Int. Cl.: G01F 1/80

(54) **DREHMOMENTMESSVORRICHTUNG FÜR VORRICHTUNG ZUM MESSEN EINES MASSESTROMES**
TORQUE MEASURING DEVICE FOR A DEVICE MEASURING THE FLOW OF MATERIAL
DISPOSITIF DE MESURE D'UN COUPLE POUR LA MESURE D'UN DEBIT MASSIQUE

(30) Priorität: 12.02.1999 DE 19905951
(43) Veröffentlichungstag der Anmeldung: 07.11.2001
(73) Patentinhaber: Schenck Process GmbH, 64293 Darmstadt (DE)
(72) Erfinder: TÖRNER, Ludger, D-64859 Eppertshausen (DE)
(74) Vertreter: Behrens, Helmut, Dipl.-Ing.
(86) Internationale Anmeldenummer: PCT/EP2000/000947
(87) Internationale Veröffentlichungsnummer: WO 2000/047955

(56) Entgegenhaltungen:
- EP-A- 0 845 662
- DE-A- 19 605 910

## Beschreibung

Die Erfindung betrifft eine Vorrichtung zum Messen eines Massestromes, insbesondere eines Schüttgüterstromes nach dem Coriolis-Meßprinzip gemäß dem Oberbegriff des Patentanspruchs 1.

Zur genauen Gewichtserfassung von Materialströmen wird die wirksame Trägheitskraft (Corioliskraft), welche bei der Kopplung eines bewegten Masseteilchens mit einem sich drehenden Bezugskörper auftritt, zur Massenbestimmung ausgenutzt. Hierzu wird der Materialstrom auf eine mit radialen Leitschaufeln versehene Scheibe aufgebracht, worauf das Schüttgut im wesentlichen senkrecht zur Rotationsachse der Scheibe weggeschleudert wird. Das Drehmoment der mit konstanter Drehzahl rotierenden Scheibe ändert sich entsprechend der Corioliskraft, wobei die Drehmomentänderung proportional ist.

Eine derartige Meßvorrichtung zur kontinuierlichen Gewichtserfassung von Materialströmen ist aus der DE-OS 33 46 145 vorbekannt. Bei dieser Meßvorrichtung wird ein mit konstanter Drehzahl rotierendes Flügelrad von einem unmittelbar darüber angeordneten Elektromotor angetrieben, der in einem stationären Gehäuse pendelnd gelagert ist. Dabei ist am Antriebsmotor ein Hebelarm angebracht, mit dem sich der drehbar gelagerte Motor auf einen mit dem Gehäuse verbundenen Kraftaufnehmer abstützt. Dadurch wird das Reaktionsdrehmoment der auftretenden Verdrehung des Motorgehäuses auf den Kraftaufnehmer übertragen. Die aufgenommene Kraft wird unter Berücksichtigung des Hebelarms in ein Drehmoment umgerechnet, was genau dem Massendurchsatz proportional ist. Bei dieser Vorrichtung ist der pendelnd aufgehängte Motor gegenüber dem stationären Gehäuse in Kugellagern geführt, die durch ihre Reibung die Drehmomentmessung verfälschen können. Auch wenn man diese Lagerreibung durch eine Leerlaufmessung ermittelt und entsprechend berücksichtigt, treten im Lastbetrieb unterschiedliche Lagerreibungen dadurch auf, dass bei einem einseitig abgestützten Motor an den Lagerwänden durch eine ungleichmäßige Schmierung unbestimmbare Reibungen auftreten, die das Messergebnis verfälschen.

Zur Vermeidung derartiger ungleichmäßiger Reibungswirkungen ist aus der EP 0 590 187 A1 eine Drehmomentmesseinrichtung mit einem Torsionsgelenk bekannt, das das Antriebsdrehmoment über drei vertikal angeordnete Blattfedern in mindestens zwei separate Kraftaufnehmerelemente einleitet, wobei sich das Antriebsdrehmoment des Motors immer symmetrisch zur Drehachse auf den beiden Kraftmesselementen abstützt. Allerdings sind hierzu mindestens zwei Kraftmesselemente notwendig, die den apparativen Aufwand der Messvorrichtung erhöhen.

Aus der DE 196 05 910 A1 ist eine Vorrichtung zum Messen eines Massestroms nach dem Coriolis-Messprinzip bekannt. Diese Messvorrichtung weist ein mit dem Massestrom beaufschlagtes Flügelrad auf, das von einem Motor mit konstanter Drehzahl angetrieben wird. Der Motor ist über ein Flanschgehäuse mit einer Trägerplatte verbunden, die axial starr, jedoch drehbeweglich an drei horizontal ausgerichteten Kraftmesselementen gelagert ist. Dabei sind die sternförmig angeordneten Messelemente radial zur Drehachse angeordnet und mit ihrem äußeren Ende biegesteif an einem ortsfesten Gehäuseflansch befestigt. An ihrem inneren Ende tragen die Messelemente, die als Doppelbiegebalken ausgebildet sind, jeweils mittels einer Konsole einen elastischen Dämpferkörper, der die Trägerplatte in Drehachsrichtung abstützt. Dabei stellen die drei sternförmig angeordneten Biegebalken eine Drehmomentmesseinrichtung dar, die das Antriebsdrehmoment des Motors erfasst. Zur Erfassung des der Messgröße proportionalen Antriebsdrehmoments sind drei hochgenaue Doppelbiegebalken notwendig.

Der Erfindung liegt deshalb die Aufgabe zugrunde, eine Messeinrichtung der eingangs genannten Art so zu verbessern, dass mit einfachen Mitteln eine hohe Messgenauigkeit erzielbar ist.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, dass durch die überkreuz angeordneten Blattfederelemente die Messvorrichtung stets auf einer vorherbestimmten Drehachse fixiert bleibt. Damit kann sich die Hebelarmlänge zur Abstützung auf einer stationären Kraftmessvorrichtung nicht verändern, so dass eine gute Nullpunktstabilität und Messwertkonstanz erreichbar ist. Hierdurch wird gleichzeitig auch eine gute Temperaturunempfindlichkeit erzielt, da die Wärmeausdehnungen sich nur unwesentlich auf die Hebelarmlänge auswirken können.

Bei einer besonderen Ausführungsart der Erfindung mit einer axialen Kugel- oder Spitzenlagerung ist von Vorteil, daß hierdurch das Gewicht des Antriebsstrangs (Flügelrad, Antriebswelle, Motor) weitgehend reibungsarm auf ein stationäres Gehäuseteil übertragbar ist, wodurch reibungsbedingte Meßfehler weitgehend vermeidbar sind. Da bei einer derartigen Ausführungsform die Drehlagerung keine axialen Kräfte aufnehmen muß, tritt auch kaum eine Kraftnebenschlußwirkung auf, so daß mit einer derartigen Meßvorrichtung in vorteilhafter Art und Weise auch kleine Förderstärken meßbar sind. Bei einer solchen axialen Lagerung ist auch vorteilhaft, daß diese in einfacher Weise auch vor Verschmutzung schützbar ist, so daß auch eine. Langzeitgenauigkeit gewährleistet ist.

Bei einer weiteren vorteilhaften Ausführungsart mit Hilfe eines Fluidlagers im Durchführungsbereich wird eine reibungsfreie horizontale Lagerung der Antriebswelle erreicht, so daß auch hierdurch reibungsbedingte Meßfehler zusätzlich vermieden werden. Gleichzeitig gewährleistet eine solche Fluid- bzw. Luftlagerung ein hervorragendes Abdichten zum Schüttgutraum, so daß die Meßeinrichtung vorteilhafterweise auch mit Überdruck betrieben werden kann, ohne daß eine Verschmutzung und Reibungserhöhung des Lagers zu befürchten ist.

Die Erfindung wird anhand eines Ausführungsbeispiels, das in der Zeichnung dargestellt ist, näher erläutert. Es zeigen:
- Fig. 1:: eine Vorrichtung zur Messung des Massestroms;
- Fig. 2:: eine vergrößerte Darstellung der Drehmomentmevorrichtung in Seitenansicht und
- Fig. 3:: die Drehmomentmeßvorrichtung in Draufsicht.

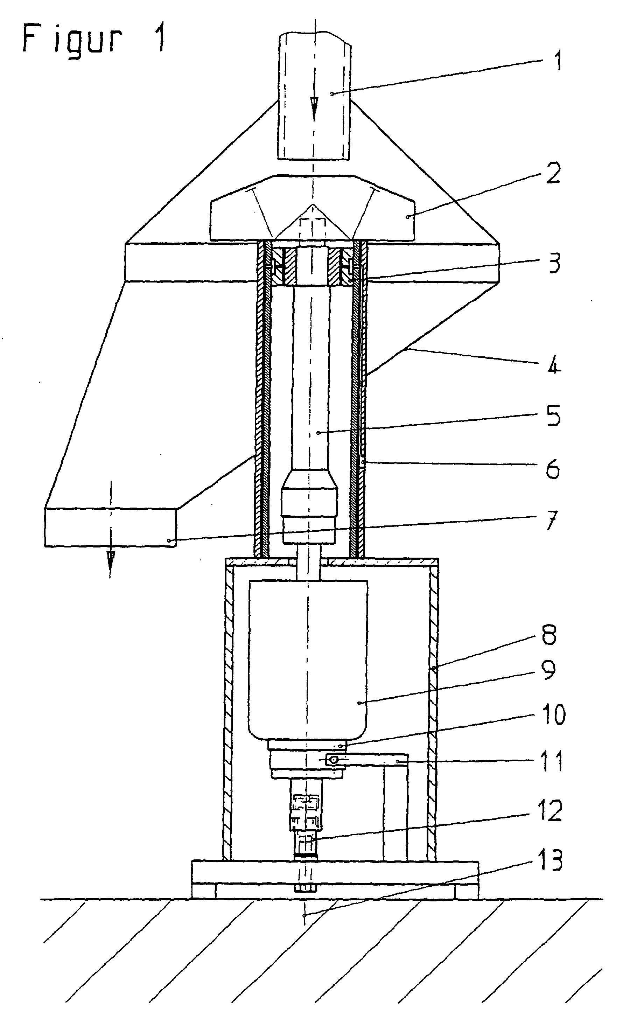

In Fig. 1 der Zeichnung ist schematisch eine Vorrichtung zur Messung des Massestroms im Schnitt dargestellt, bei dem das Flügelrad 2 oberhalb des Antriebsmotors 9 auf einer verlängerten Antriebsachse 5 angeordnet ist und wo das Antriebsmoment über ein Drehlagerelement 12 auf einen Kraftaufnehmer 11 als Drehmomentmeßvorrichtung übertragen wird.

Der Massestrom, der meist ein Schüttgutstrom darstellt, wird oben über eine rohrförmige Schüttgutzufuhr 1 im Zentrum auf ein Flügelrad 2 geleitet. Das Flügelrad 2 wird durch den Antriebsmotor 9 mit konstanter Geschwindigkeit angetrieben, wodurch der Schüttgutstrom horizontal ausgelenkt wird und durch das umgebende Schüttgutgehäuse 4 durch einen Schüttgutauslauf 7 nach unten abfließt. Das Flügelrad 2 befindet sich auf einer verlängerten vertikalen Antriebswelle 5, die durch ein Luftlager 3 horizontal gegenüber dem Schüttgutgehäuse 4 gelagert ist. Durch dieses Luftlager 3 wird gleichzeitig eine Abdichtung gegenüber dem Schüttgutgehäuse 4 erreicht, so daß eine Verschmutzung des Lagers 3 weitgehend vermieden wird. Dabei muß der Luftdruck im Lager 3 allerdings um einen bestimmten Wert größer sein als der Druck im Schüttgutgehäuse 4. Dieses Lager 3 eignet sich deshalb auch gut für Schüttgutströme, die mit Überdruck durch die Meßvorrichtung gefördert werden. Vorteilhafterweise ist ein derartiges Luftlager 3 auch weitgehend reibungsfrei, so daß dadurch das Meßergebnis nicht durch Reibungsverluste verfälscht werden kann. Dies ist insbesondere bei der Messung kleiner Massenströme wichtig, da hier bereits kleine Reibungsverluste zu verhältnismäßig großen Meßfehlern führen. Dieses Luftlager 3 wird über einen Druckluftanschluß 6 am Gehäuseteil 4 mit dem notwendigen Überdruck versorgt, der in industriellen Anwendungsbereichen meist zentral vorhanden ist. Ein solches Luftlager 3 kann aber auch mit anderen für derartige Lager geeigneten Fluiden betrieben werden, soweit dies aus konstruktiven oder versorgungstechnischen Gründen notwendig ist.

Das Schüttgutgehäuse 4 ist auf einem darunterliegenden Motorgehäuse 8 als stationärer Teil befestigt. In dem Motorgehäuse 8 ist der Antriebsmotor 9 vertikal angeordnet. Dabei ist der Motor 9 an seiner Unterseite auf einer Kopfplatte 10 befestigt, die den gesamten Antriebsstrang (Flügelrad, Antriebswelle, Motor) auf einem Drehlagerelement 12 abstützt. Das Drehlagerelement 12 besteht im wesentlichen aus einer oberen Lagerhülse 15 und einer unteren Lagerhülse 18, zwischen denen eine Kugel 14 als Axiallagerung angeordnet ist. In dieses Drehlagerelement 12 ist gleichzeitig die Drehmomentmeßvorrichtung 11 integriert, die ein elektrisches Signal liefert, das der Förderstärke bzw. der Fördermenge des Schüttgutstromes proportional ist.

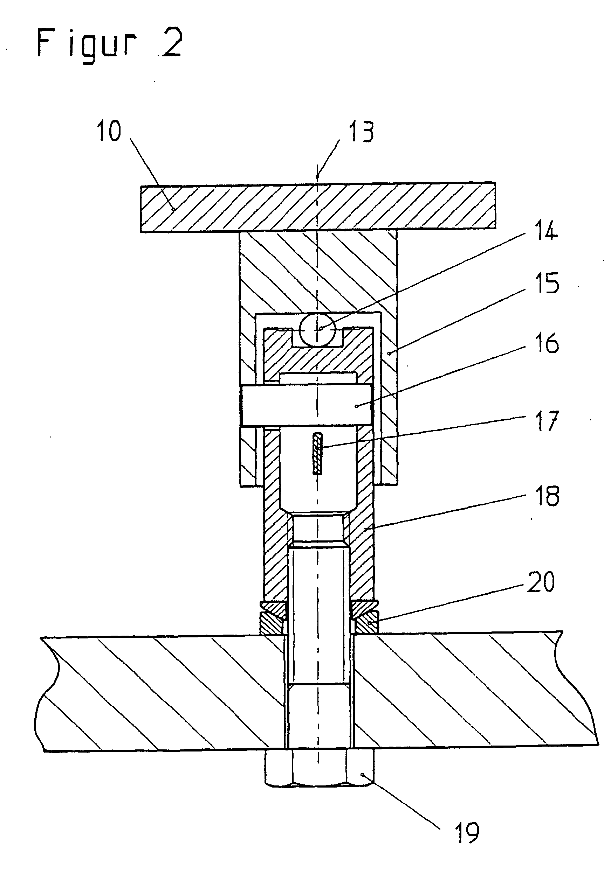

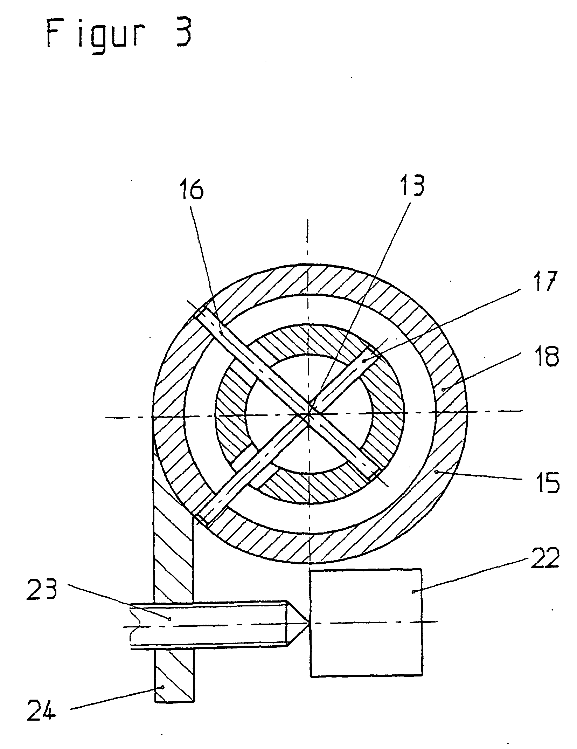

Das Drehlagerelement 12 mit der Drehmomentmeßvorrichtung 11 ist im einzelnen in Fig. 2 und 3 vergrößert dargestellt. Dabei wurden für dieselben Teile in den dargestellten Figuren auch dieselben Bezugszeichen verwandt. Bei dem Drehlagerelement 12 ist die obere Lagerhülse 15 fest mit der Kopfplatte 10 verbunden und symmetrisch zur Drehachse 13 des Motors 9 angeordnet. In die nach unten offene obere Lagerhülse 15 ist die untere Lagerhülse 18 koaxial eingeführt, wobei die untere Lagerhülse 18 auf ihrem oberen Teil eine Aussparung für die Kugel als Axiallagerung enthält. Durch diese Aussparung wird die Kugel 14 auf einer vorgegebenen Drehachse fixiert.

Die untere Lagerhülse 18 ist in ihrem unteren Bereich mit einer Kugelpfanne 24 versehen, durch die die untere Lagerhülse 18 senkrecht und symmetrisch zur vorgesehenen Drehachse 13 am Motorgehäuse 4 mittels einer Befestigungsschraube 19 angebracht ist. Beide Lagerhülsen 15, 18 sind seitlich voneinander beabstandet, so daß sie ohne Berührung gegeneinander verdrehbar sind.

Im Überlappungsbereich der beiden zylinderförmigen Lagerhülsen 15, 18 sind horizontal und um 90° sich kreuzende Blattfederelemente 16, 17 vorgesehen, die mit einem Ende an der oberen Lagerhülse 15 und mit dem anderen Ende an der unteren Lagerhülse 18 befestigt sind. Da die sich kreuzenden Federelemente 16, 17 durch den Hohlraum des unteren Zylinders 18 geführt werden, sind auf der gegenüberliegenden Seite der unteren Lagerhülse 18 zwei seitliche Aussparungen zur Durchführung der Federelemente 16, 17 vorgesehen, die einen bestimmten Verdrehwinkel zwischen den beiden Lagerhülsen 15, 18 ermöglichen. Die Blattfederelemente 16, 17 sind dabei so ausgebildet, daß sie in Drehrichtung des Antriebsmotors 9 biegeweich und in Längsrichtung biegesteif sind. Durch die winkelmäßig versetzt angeordneten Blattfederelemente 16, 17 kreuzen sich diese auf der vorgesehenen Drehachse 13 und fixieren dadurch beide Lagerhülsen 15, 18 symmetrisch zu dieser Drehachse 13. Dabei können auch andere Kreuzungswinkel als auch mehr als zwei Federelemente vorgesehen werden, soweit dies nach der vorgesehenen Konstruktion des Lagerelements vorteilhaft erscheint. Hierbei ist allerdings zu gewährleisten, daß die Fixierung auf der vorgesehenen Drehachse 13 erfolgt. Die Blattfederelemente 16, 17 sind in vertikaler Richtung in unterschiedlichen Ebenen angeordnet, so daß eine direkte Berührung der Federelemente 16, 17 ausgeschlossen ist.

Als Axiallagerung kann anstatt einer Kugel 14 auch eine Spitzenlagerung oder vergleichbare Lagerungen vorgesehen werden, soweit dadurch eine nahezu reibungslose Axiallagerung um die Drehachse 13 gewährleistet ist.

An der oberen Lagerhülse 15 ist am äußeren Umfang seitlich rechtwinklig zum Mittelpunkt ein Hebelarm 24 angebracht, an dessen Ende horizontal und rechtwinklig ein Druckstück 23 befestigt ist. Dabei stützt sich das Druckstück 23 auf ein Kraftmeßelement 22 ab, das fest mit dem Boden des stationären Motorgehäuses 8 verbunden ist. Bei dem Kraftmeßelement 22 kann es sich vorteilhafterweise um einen mit Dehnungsmeßstreifen bestückten Biegebalken handeln, der als Ausgangssignal ein der Kraft entsprechendes elektrisches Signal liefert.

Beim Betrieb der Meßvorrichtung stützt sich der Motor 9 mit seinem Antriebsmoment radial auf das Kraftmeßelement 22 ab, woraus mit Hilfe des bekannten Hebelarms 24 das Antriebsmoment bestimmt wird. Aus dem Antriebsmoment kann in bekannter Weise die Förderstärke und/oder die Fördermenge ermittelt werden. Dabei wird auch durch die spezielle Anordnung der Blattfederelemente 16, 17 gewährleistet, daß sich die festgelegte Drehachse 13 auch bei großen Belastungsänderungen nicht aus ihrer radialen Lage verschiebt und dadurch die vorbestimmte Hebelarmlänge verändert. Durch eine derartige winkelversetzte sich kreuzende Drehlagerung 12 können in Drehrichtung auch sehr biegeweiche Blattfedern 16, 17 eingesetzt werden, wodurch kaum eine meßwertverfälschende Kraftnebenschlußwirkung auftritt. Hierdurch ist diese Meßvorrichtung auch für verhältnismäßig kleine Förderstärken bei hohen Genauigkeitsanforderungen einsetzbar, weil diese nahezu kraftnebenschlußfreie Drehmomentübertragung nur geringe Meßfehler verursacht. Dieser geringe Meßfehler bei kleinen Förderstärken wird noch dadurch verbessert, daß ein nahezu reibungsfreies Luft- 3 und Axiallager 14 eingesetzt wird, da hierdurch kaum Reibungs- und Kraftnebenschlußfehler in der gesamten Meßvorrichtung auftreten können.

Derartige nahezu reibungs- und kraftnebenschlußfreie Lagerungen können vorteilhafterweise auch bei Meßvorrichtungen für große Förderstärken eingesetzt werden. Hierbei sind auch Getriebemotoren oder Zwischengetriebe denkbar, sofern diese hinreichend reibungsarm ausgestattet sind oder deren Reibung rechnerisch oder konstruktiv kompensierbar ist.

Eine derartige nahezu reibungs- und kraftnebenschlußfreie Lagerung kann auch für hängende Antriebsstränge mit obenliegenden Antrieben vorgesehen werden. Dabei muß dann die innenliegende Lagerhülse 18 so ausgebildet sein, daß die Kugel 14 unterhalb der Hülsenabdeckung in einer seitlichen Fixierung angeordnet ist. Die außenliegende Lagerhülse 15 muß dann so ausgebildet sein, daß mindestens ein Quersteg vorgesehen ist, der unterhalb der Kugel 14 durch die innenliegende Hülse 18 geführt ist. Damit wird die axiale Kraft des Antriebsstrangs über die Abdeckung der Innenhülse und die darüber angeordnete Kugel 14 auf den Quersteg der Außenhülse 15 übertragen, so daß hierdurch die gleiche Funktionsweise gewährleistet ist wie bei einer unterhalb des Schüttgutbehälters 4 angeordneten Motorlagerung 12.

## Patentansprüche

1. Vorrichtung zum Messen eines Massestromes, insbesondere eines Schüttgutstromes, nach dem Coriolis-Messprinzip, die ein von einem Motor (9) mit konstanter Drehzahl angetriebenes Flügelrad (2) enthält, auf das der Materialstrom aufgegeben und radial umgeleitet und durch eine Drehmomentmesseinrichtung das Antriebsdrehmoment gemessen wird, wobei das Antriebsdrehmoment über in Drehrichtung biegeweiche und in Längsrichtung biegesteife Blattfederelemente (16, 17) übertragen wird, **dadurch gekennzeichnet, dass** zur Antriebsdrehmomentübertragung ein Drehlagerelement (12) vorgesehen ist, welches zwischen dem Motor (9) und einem stationären Geräteteil (8) angeordnet ist, und mindestens zwei horizontal und winkelversetzt sich kreuzend angeordnete Blattfederelemente (16, 17) enthält, durch die das Antriebsdrehmoment frei von Axialkräften auf ein Kraftmesselement (22) übertragen wird, wobei der Kreuzungspunkt der Blattfederelemente (16, 17) auf der Drehachse (13) des Motors (9) liegt.

2. Vorrichtung nach Anspruch 1, **dadurch gekennzeichnet, dass** das Drehlagerelement (12) mindestens zwei um die Drehachse (13) gegeneinander verdrehbare Teile (15, 18) umfasst, die durch die Blattfederelemente (16, 17) miteinander verbunden sind, wobei nur das mit dem Antrieb (9) verbundene Lagerelement (15) gegenüber dem anderen Lagerelement (18) bewegbar ist.

3. Vorrichtung nach Anspruch 1 oder 2, **dadurch gekennzeichnet, dass** die gegeneinander verdrehbaren Teile (15, 18) als zylinderförmige Hülsen ausgebildet sind und zu einem Teil koaxial ineinander greifen.

4. Vorrichtung nach einem der vorhergehenden Ansprüche, **dadurch gekennzeichnet, dass** ein Axiallagerelement (14) vorgesehen ist, durch das das Gewicht des Antriebsstrangs über dem vorgesehenen Drehpunkt (13) weitgehend reibungsfrei in ein stationäres Geräteteil (8) übertragen wird.

5. Vorrichtung nach Anspruch 4, **dadurch gekennzeichnet, dass** das Axiallagerelement (14) auf der vorgesehenen Drehachse (13) angeordnet ist, wobei die Gewichtskraft weitgehend punktförmig über ein im Bereich der Drehachse (13) angeordnetes Kugel- oder Spitzenlager auf das stationäre Gehäuseteil (8) übertragen wird.

6. Vorrichtung nach Anspruch 4 oder 5, **dadurch gekennzeichnet, dass** das Axiällagerelement (14) in dem Drehlagerelement (12) integriert und zwischen den beiden gegeneinander verdrehbaren Lagerelementen (15, 18) angeordnet ist.

7. Vorrichtung nach einem der vorhergehenden Ansprüche, **dadurch gekennzeichnet, dass** der Antriebsstrang im Bereich der Antriebswelle (5) horizontal gelagert ist, wobei die Horizontallagerung (3) so ausgebildet ist, dass nahezu keine Reibung auftritt.

8. Vorrichtung nach Anspruch 7, **dadurch gekennzeichnet, dass** die Horizontallagerung (3) der Antriebswelle (5) als Luftlager ausgebildet ist, das gleichzeitig die Durchführung des Antriebsstrangs in den Schüttgutraum (4) abdichtet.

9. Vorrichtung nach Anspruch 7 oder 8, **dadurch gekennzeichnet, dass** das Fluidlager (3) als Luftlager ausgebildet ist, das im Übergangsbereich der Antriebswelle (5) zum Flügelrad (2) angeordnet ist.

10. Vorrichtung nach einem der vorhergehenden Ansprüche, **dadurch gekennzeichnet, dass** der Antriebsstrang so angeordnet ist, dass der Motor (9) unterhalb des Flügelrades (2) und darunter das Drehlagerelement (12) als auch das Axiallagerelement (14) vorgesehen ist.

11. Vorrichtung nach einem der vorhergehenden Ansprüche, **dadurch gekennzeichnet, dass** der Antriebsstrang so angeordnet ist, dass der Motor (9) oberhalb des Flügelrades (2) und darüber das Dreh- (12) und Axiallagerelement (14) vorgesehen ist.

## Claims

1. A device for measuring a mass flow, especially a bulk material flow, using the Coriolis measurement principle, wherein said device contains an impeller (2) which is driven at a constant rotational speed by a motor (9) and upon which the flow of material is deposited and diverted radially, wherein the drive torque is measured by a torque measuring instrument, and wherein the drive torque is transferred by leaf spring elements (16, 17) which are flexible in the direction of rotation but resistant to bending in the longitudinal direction, **characterized in that**, for the purposes of transmitting the drive torque, there is provided a rotary bearing element (12) which is arranged between the motor (9) and a stationary part of the apparatus (8) and contains at least two horizontal, angularly offset, crossing leaf spring elements (16, 17) via which the drive torque is transferred, free of axial forces, to a force-measuring element (22), whereby the crossover point of the leaf spring elements (16, 17) lies on the rotational axis (13) of the motor (9).

2. A device in accordance with Claim 1, **characterized in that** the rotary bearing element (12) comprises at least two parts (15, 18) which are relatively rotatable about the rotational axis (13) and are connected together by the leaf spring elements (16, 17), whereby only the bearing element (15) connected to the drive (9) is movable relative to the other bearing element (18).

3. A device in accordance with Claim 1 or 2, **characterized in that** the oppositely rotatable parts (15, 18) are in the form of cylindrical sleeves and interpenetrate coaxially to a partial extent.

4. A device in accordance with any of the preceding Claims, **characterized in that** there is provided an axial bearing element (14) by means of which the weight of the drive train is transferred in a virtually friction-free manner, to a stationary part of the apparatus (8) via the fulcrum (13)provided.

5. A device in accordance with Claim 4, **characterized in that** the axial bearing element (14) is arranged on the rotational axis (13) provided, whereby the weight is transferred to the stationary housing part (8) in a largely point-like manner via a ball bearing or a conical bearing arranged in the region of the rotational axis (13).

6. A device in accordance with Claim 4 or 5, **characterized in that** the axial bearing element (14) is integrated into the rotary bearing element (12) and is arranged between the two relatively rotatable bearing elements (15, 18).

7. A device in accordance with any of the preceding Claims, **characterized in that** the drive train is mounted horizontally in the region of the drive shaft (5), whereby the horizontal bearing (3) is formed in such a manner that almost no friction arises.

8. A device in accordance with Claim 7, **characterized in that** the horizontal bearing (3) of the drive shaft (5) is in the form of an air bearing which simultaneously seals the passage for the drive train into the bulk material space (4).

9. A device in accordance with Claim 7 or 8, **characterized in that** the fluid bearing (3) is in the form of an air bearing which is arranged in the junction zone between the drive shaft (5) and the impeller (2).

10. A device in accordance with any of the preceding Claims, **characterized in that** the drive train is arranged in such a manner that the motor (9) is provided below the impeller (2) and therebelow the rotary bearing element (12) and also the axial bearing element (14).

11. A device in accordance with any of the preceding Claims, **characterized in that** the drive train is arranged in such a manner that the motor (9) is provided above the impeller (2) and thereabove the rotary (12) and the axial bearing element (14).

## Revendications

1. Dispositif pour mesurer un courant de masse, en particulier un courant de produits en vrac, selon le principe de mesure de Coriolis, qui contient une roue à aubes (2) entraînée par un moteur (9) à vitesse de rotation constante, sur laquelle le courant de matière est chargé et dévié radialement et, par un dispositif de mesure du couple de rotation, le couple de rotation d'entraînement est mesuré, le couple de rotation d'entraînement étant transmis par des éléments à ressorts à lames (16, 17) souples en flexion dans le sens de rotation et rigides en flexion dans la direction longitudinale, **caractérisé en ce que** pour la transmission du couple de rotation d'entraînement il est prévu un élément de palier de rotation (12) qui est disposé entre le moteur (9) et une partie d'appareil (8) fixe, et contient au moins deux éléments à ressorts à lames (16, 17) disposés horizontalement et se croisant décalés angulairement, par lesquels le couple de rotation d'entraînement est transmis sans forces axiales à un élément de mesure de la force (22), le point de croisement des éléments à ressorts à lames (16, 17) se situant sur l'axe de rotation (13) du moteur (9).

2. Dispositif selon la revendication 1, **caractérisé en ce que** l'élément de palier de rotation (12) comprend au moins deux parties (15, 18) tournant l'une par rapport à l'autre autour de l'axe de rotation (13), qui sont reliées entre elles par les éléments de ressorts à lames (16, 17), seule la partie de palier (15), reliée à l'entraînement (9), étant déplaçable par rapport à l'autre partie de palier (18).

3. Dispositif selon la revendication 1 ou 2, **caractérisé en ce que** les parties (15, 18) pouvant tourner l'une par rapport à l'autre sont réalisées en tant que douilles de forme cylindrique et s'engagent en partie l'une dans l'autre coaxialement.

4. Dispositif selon l'une des revendications précédentes, **caractérisé en ce qu'**il est prévu un élément d'appui axial (14) par lequel le poids de la chaîne cinématique est transmis, par le point de rotation (13) prévu, à une partie d'appareil (8) fixe, pratiquement sans friction.

5. Dispositif selon la revendication 4, **caractérisé en ce que** l'élément d'appui axial (14) est disposé sur l'axe de rotation (13) prévu, la force de poids étant transmise à la partie d'appareil (8) fixe, pratiquement ponctuellement, par un roulement à billes ou un appui à pivot disposé dans la zone de l'axe de rotation (13).

6. Dispositif selon la revendication 4 ou 5, **caractérisé en ce que** l'élément d'appui axial (14) est intégré à l'élément de palier de rotation (12) et est disposé entre les deux parties de palier (15, 18) pouvant tourner l'un par rapport à l'autre.

7. Dispositif selon l'une des revendications précédentes, **caractérisé en ce que** la chaîne cinématique est montée horizontalement dans la zone de l'arbre d'entraînement (5), la suspension horizontale (3) étant réalisée de manière qu'il ne se produise pratiquement pas de friction.

8. Dispositif selon la revendication 7, **caractérisé en ce que** la suspension horizontale (3) de l'arbre d'entraînement (5) est réalisée comme appui pneumatique qui rend étanche en même temps la traversée de la chaîne cinématique dans le compartiment (4) des produits en vrac.

9. Dispositif selon la revendication 7 ou 8, **caractérisé en ce que** le palier fluide (3) est réalisé comme palier pneumatique qui est disposé dans la zone de transition entre l'arbre d'entraînement (5) et la roue à aubes (2).

10. Dispositif selon l'une des revendications précédentes, **caractérisé en ce que** la chaîne cinématique est disposée de manière que le moteur (9) soit prévu au-dessous de la roue à aubes (2) et, au-dessous, l'élément de palier de rotation (10) ainsi que l'élément d'appui axial (14).

11. Dispositif selon l'une des revendications précédentes, **caractérisé en ce que** la chaîne cinématique est disposée de manière que le moteur (9) soit prévu au-dessus de la roue à aubes (2) et, au-dessus, l'élément de palier de rotation (12) et l'élément d'appui axial (14).
